(19) Europäisches Patentamt
European Patent Office
Office européen des brevets

(11) Numéro de publication : 0 433 240 A2

(12) **DEMANDE DE BREVET EUROPEEN**

(21) Numéro de dépôt : 90810983.8

(51) Int. Cl.$^5$ : G01N 21/41

(22) Date de dépôt : 13.12.90

(30) Priorité : 13.12.89 CH 4474/89

(43) Date de publication de la demande : 19.06.91 Bulletin 91/25

(84) Etats contractants désignés : CH DE FR GB LI

(71) Demandeur : CENTRE SUISSE D'ELECTRONIQUE ET DE MICROTECHNIQUE S.A.
Maladière 71
CH-2007 Neuchâtel (CH)

(72) Inventeur : Parriaux, Olivier
Rue Cité-Derrière 3
CH-1005 Lausanne (CH)

(74) Mandataire : Brulliard, Joel
c/o CENTRE SUISSE D'ELECTRONIQUE ET DE MICROTECHNIQUE S.A. Maladière 71
CH-2007 Neuchâtel (CH)

(54) **Cellule optique transductrice à haute efficacité et ses applications aux capteurs optiques.**

(57) L'invention concerne une cellule optique transductrice à haute efficacité et ses applications aux capteurs optiques.

La cellule optique transductrice (1) se compose d'un milieu transducteur (4) inséré dans le coeur (3) d'une fibre optique. Une gaine (2) est située autour du coeur (3) de ladite fibre optique.

Le milieu transducteur a un indice de réfraction $n_m$ moins élevé que l'indice de réfraction $n_g$ du coeur de la fibre optique.

Une configuraiton à guide d'onde optique intégré est décrite.

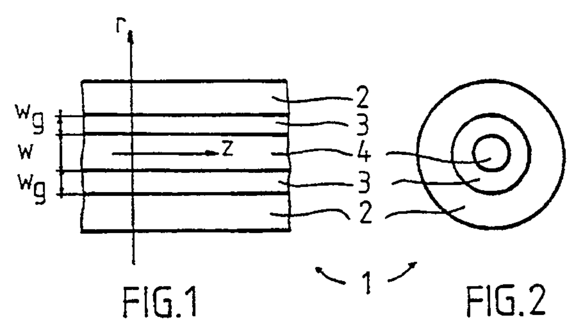


FIG.1 FIG.2

EP 0 433 240 A2

Jouve, 18, rue Saint-Denis, 75001 PARIS

# CELLULE OPTIQUE TRANSDUCTRICE A HAUTE EFFICACITE ET SES APPLICATIONS AUX CAPTEURS OPTIQUES

La présente invention concerne, de manière générale, les guides de lumière monomodes et, plus particulièrement, une cellule optique transductrice à haute efficacité et ses applications aux capteurs optiques.

Le document de la présentation faite à la conférence internationale OFS'84 des 5-7 Septembre 1984 à Stuttgart et intitulé "Single-Mode Fibre Evanescent Wave Spectroscopy", de O. Parriaux et al., pp. 71-74, montre un capteur à spectroscopie optique permettant la détermination des caractéristiques d'absorption d'un milieu transducteur. Le capteur utilise une fibre monomode dans laquelle l'onde se propage par réflections internes totales multiples. Une cellule transductrice constituée d'une section de fibre optique polie tangentiellement est réalisée au bout de ladite fibre. Un milieu transducteur constitué d'un matériau absorbant est déposé sur la surface polie de la cellule transductrice. Dans une telle réalisation une partie du champ évanescent de l'onde guidée pénètre dans le milieu transducteur.

Le document ci-dessus enseigne que la sensibilité du dispositif dépend de l'importance de la partie du champ évanescent se propageant dans le milieu transducteur. En d'autres termes, la sensibilité est d'autant plus grande que le milieu transducteur est proche du coeur de la fibre et que l'indice de réfraction dudit milieu est voisin de l'indice du coeur de la fibre.

Un inconvénient majeur de cette solution est que la sensibilité du capteur peut être très faible lorsque l'indice du milieu transducteur est sensiblement inférieur à l'indice du coeur de la fibre.

Aussi un objet de l'invention est-il une cellule optique transductrice ne présentant pas l'inconvénient ci-dessus mentionné.

Un autre objet de l'invention est une cellule optique transductrice de configuration électromagnétique particulière permettant à la partie évanescente du champ électromagnétique modal de l'onde de sonde d'avoir une amplitude appréciable dans la couche transductrice, dans le cas où le milieu transducteur est d'indice de réfraction moins élevé que celui du guide de sonde.

Les caractéristiques de l'invention sont définies dans les revendications.

Un avantage de l'invention vis-à-vis de l'art antérieur est la réalisation d'un capteur à spectroscopie optique permettant un vaste champ d'applications pratiques basé, en particulier sur l'excitation de la fluorescence, l'effet photochimique, la variation de l'indice de réfraction ou l'absorption sélective.

Un autre avantage de l'invention est le fait que l'onde de sonde a une distribution de champ définie de façon unique et stable, indépendante des conditions d'excitation et des divers aléas sur le guide.

Un autre avantage de l'invention est la compatibilité entre configuration électromagnétique et structure capillaire pour l'analyse de gaz ou de liquides.

D'autres objets, caractéristiques et avantages de la présente invention apparaîtront plus clairement à la lecture de la description suivante d'exemples de réalisation, ladite description étant faite à titre purement illustratif et en relation avec les dessins joints dans lesquels :

- la fig. 1 montre une première configuration de la cellule optique transductrice pour laquelle le guide de lumière est un guide d'onde optique intégrée ;
- la fig. 2 montre une deuxième configuration de la cellule optique transductrice pour laquelle le guide de lumière est une fibre optique ;
- la fig. 3 montre la répartition du profil d'indice de réfraction de la cellule optique transductrice (fig. 3.a.) ainsi que la répartition du champ électromagnétique du mode fondamental (fig. 3.b.) et
- la fig. 4 montre une application de la cellule optique transductrice comme capteur à interférométrie optique à deux modes (fig. 4.a) ainsi que les puissances optiques pour différentes variations de l'indice de réfraction du milieu transducteur (fig. 4.b).

La cellule optique transductrice selon l'invention est représentée aux fig. 1 et 2 selon deux configurations possibles.

La fig. 1 montre une cellule optique transductrice 1 utilisant un guide d'onde optique du genre circuit intégré. La cellule optique transductrice 1 comporte une couche transductrice 4 insérée entre deux guides d'onde optique 3. Ladite couche transductrice 4 est caractérisée par la grandeur physique ou chimique à mesurer. Un substrat 2 est situé de part et d'autre de l'ensemble couche transductrice 4 et guides d'onde 3.

La fig. 2 montre une cellule optique transductrice 1 utilisant une fibre optique. Les éléments analogues à ceux de la fig. 1 portent les mêmes références. La cellule optique transductrice 1 comporte un milieu transducteur 4 inséré dans le coeur 3 d'une fibre optique. Ledit milieu transducteur 4 est caractérisé par la grandeur physique ou chimique à mesurer. La gaine 2 de ladite fibre optique enrobe l'ensemble milieu transducteur 4 et coeur 3 de la fibre optique.

Le profil des indices de réfraction de la cellule optique transductrice 1, quelle que soit sa configuration, est représenté à la fig. 3.a. Les deux guides d'onde 3 (le coeur de la fibre optique) ont une épaisseur $w_g$ inférieure ou égale à leur épaisseur de coupure $w_c$ pour leur mode fondamental. L'épaisseur de coupure $w_c$ d'un guide d'onde correspond à l'épaisseur au-delà de laquelle l'onde électromagnétique, pour une longueur d'onde λ donnée, ne peut plus être confinée intégralement dans le guide. La couche transductrice 4 (milieu transducteur) a une épaisseur w. L'indice de réfraction $n_m$ de la couche transductrice 4 (milieu transducteur) est inférieur à l'indice $n_g$ du guide d'onde.

Les deux configurations ci-dessus confèrent une grande sensibilité à la cellule optique transductrice lorsque w tend vers une valeur très faible. Ladite cellule optique transductrice, de par sa structure originale, permet à l'onde de sonde de se propager dans le milieu transducteur en ayant un champ d'amplitude notable. Les changements des propriétés optiques dudit milieu transducteur sont éprouvés par la partie du champ électromagnétique modal extérieure au guide de sonde. Cette partie du champ modal correspond au centre du lobe du mode fondamental guidé.

La structure de la cellule optique transductrice confère au champ électromagnétique une configuration particulière permettant la propagation dans le milieu transducteur d'une onde de sonde importante (fig. 3.b). Dans une telle structure l'onde de sonde ne peut être confinée intégralement dans le guide de sonde. Ladite onde de sonde est alors contrainte à se propager dans le milieu transducteur où son amplitude est importante du fait de la faible épaisseur de ce dernier.

En ce qui concerne les guides d'ondes optiques, un mode de réalisation préférentiel est donné par J.E. Gortych et al dans l'article "Fabrication of planar optical waveguides by $K^+$ ion exchange in BK7 glass" (Optics Letters, vol. II, No 2, Février 86, pp. 100 à 102).

Les deux substrats supportant lesdits guides d'ondes sont fixés, par exemple, par évaporation d'aluminium entre substrats de façon à obtenir une couche transductrice d'épaisseur w, par exemple de l'ordre de 100 nm. Les guides d'ondes à gradient d'indice ont, par exemple, une longueur de 3 microns et une profondeur de 2 microns.

L'utilisation d'un substrat en silicium, pour lequel l'indice de réfraction $n_g$ des guides d'ondes optiques est plus élevé que dans le mode de réalisation précédent, permet d'augmenter encore la sensibilité du capteur. A titre d'exemple, on peut citer l'obtention de guides d'ondes en $SiO_2$-$TiO_2$ d'indice de réfraction proche de 1,8 ou encore en $Si_3N_4$ d'indice proche de 2.

Le milieu transducteur peut être, de manière préférentielle

- toutes solutions aqueuses ayant, par exemple, un indice de réfraction supérieur ou égal à 1.33 ;
- toutes solutions avec solvants ordinaires tels que des alcools, par exemple d'indice supérieur ou égal à 1.4.

De manière non limitative on peut encore citer :

- toutes substances absorbantes, par exemple l'hémoglobine, pour la détermination du degré de saturation en oxygène de l'hémoglobine du sang;
- toutes substances fluorescentes, telles la fluorescéine isothiocyanate, par exemple pour la mesure de la concentration en ions hydrogène ;
- tous milieux changeant d'indice de réfraction sous l'effet d'une variation de température, par exemple les liquides, ou de la concentration, par exemple les sucres.

Une application de la cellule transductrice de l'invention est un capteur physique ou chimique à spectroscopie optique. Un tel capteur est utilisé pour la mesure de toute grandeur physique ou chimique, tout phénomène se traduisant par une modification de la répartition spectrale de la lumière reçue ou émise. La modification du spectre de la lumière reçue peut être due à la variation de l'indice de réfraction $n_m$ du milieu transducteur ou encore du coefficient d'absorption. Les capteurs optiques à spectroscopie par absorption utilisent cette dernière propriété. La modification de la répartition spectrale de la lumière émise est utilisée dans les capteurs à spectroscopie par fluorescence.

De manière générale, un capteur à spectroscopie optique se compose, par exemple, d'une source de lumière monomode ou multimode délivrant une onde lumineuse $P_0$. Ladite onde lumineuse peut être divisée en amplitude par un coupleur optique à deux branches. Ledit coupleur optique fournit une onde de référence $P_R$ et une onde de sonde. L'onde de sonde peut être injectée dans la cellule transductrice optique de l'invention et voir ainsi sa répartition spectrale modifiée sous l'effet de la grandeur physique ou chimique à mesurer. L'onde de sonde modifiée $P_s$ peut être détectée par un détecteur, tout comme l'onde de référence. Une immunité aux fluctuations de la source de lumière est, par exemple, obtenue en divisant le signal électrique représentant l'onde de sonde perturbée $P_s$ par le signal représentant l'onde de référence $P_R$. La grandeur physique ou chimique est déterminée par l'analyse de la répartition spectrale du signal de sortie résultant.

Une deuxième application de la cellule transductrice de l'invention est un capteur physique ou chimique à interférométrie optique, utilisant par exemple un interféromètre du type Mach-Zehnder. Un tel capteur permet, par exemple, la mesure de la variation d'indice de réfraction du milieu transducteur.

Une autre application de la cellule optique transductrice de l'invention est un capteur physique ou chimique à interférométrie optique à deux modes. Une telle application nécessite que ladite cellule optique autorise la propagation de son mode fondamental et de son mode de premier ordre (fig. 4.a). Pour ce faire, les deux guides d'ondes 3 sont élargis de façon à laisser se propager lesdits modes. Seul le mode fondamental de l'un des guides d'entrée est injecté dans la cellule optique transductrice. Dans le milieu transducteur le mode fondamental de la cellule optique subit tous changements d'indice de façon plus sensible que le mode de premier ordre, ce dernier n'ayant qu'un champ magnétique faible du fait qu'il passe par zéro. Toutes perturbations d'indice affectant le reste de la cellule optique affectent les deux modes de façon identique. Le déphasage entre lesdits modes reste donc inchangé.

La cellule optique transductrice qui n'est autre qu'un coupleur optique directionnel à deux guides a une longueur L donnée par l'expression :

$$L = \frac{L_c}{2} + m\, L_c$$

où $L_c = L_b/2$ est la longueur de couplage au repos du coupleur et $L_b$ est la longueur de battement des deux modes utilisés. m est un nombre entier.

La fig. 4.b illustre la puissance $P_1$ et $P_2$ normalisée à 1 contenue dans chacun des guides de sortie. Une variation de l'indice du milieu transducteur modifie chacune des constantes de propagation $\beta_p$ et $\beta_I$ des deux modes de façon différente. Il en résulte une variation de la longueur de couplage

$$L_c = \frac{\pi}{\beta_p - \beta_i}$$

En d'autres termes, en présence d'une augmentation (diminution) d'indice, le coupleur se comporte comme un coupleur trop long (trop court) par rapport à sa longueur de couplage au repos. La conséquence est que les puissances $P_1$ et $P_2$ dans les branches de sortie ne seront plus identiques. Les courbes 10 à 12 et 20 à 22 représentent les puissances normalisées des deux guides de sortie, respectivement pour l'indice de repos donnant la longueur de couplage de repos et pour une augmentation et une diminution de l'indice du milieu transducteur.

Si m est différent de zéro le déphasage accumulé entre les deux modes augmente proportionnellement à (m+1/2). L'effet décrit n'en sera que plus prononcé et la sensibilité proportionnellement plus grande.

## Revendications

1. Cellule optique transductrice (1) à guide d'onde optique intégré, caractérisée
   - en ce qu'elle se compose d'une couche transductrice (4) insérée entre deux guides d'onde optique (3) et d'un substrat (2) situé de part et d'autre de l'ensemble couche transductrice (4) et guides d'onde (3) ;
   - en ce que les deux guides d'onde (3) ont respectivement une épaisseur $w_g$ inférieure ou égale à leur épaisseur de coupure $w_c$ pour leur mode fondamental et un indice de réfraction $n_g$ plus élevé que l'indice de réfraction $n_s$ du substrat (2) ;
   - en ce que l'indice de réfraction $n_m$ de la couche transductrice est moins élevé que l'indice de réfraction $n_g$ des guides d'onde (3)
   - et en ce que l'épaisseur w de la couche transductrice (4) a une valeur très faible.

2. Cellule optique transductrice (1) à fibre optique, caractérisée
   - en ce qu'elle se compose d'un milieu transducteur (4) inséré dans le coeur (3) d'une fibre optique et d'une gaine (2) située autour du coeur (3) de ladite fibre optique ;
   - en ce que le coeur (3) de la fibre optique a une épaisseur $w_g$ inférieure ou égale à sa valeur de coupure $w_c$ pour son mode fondamental et un indice de réfraction $n_g$ plus élevé que l'indice de réfraction $n_s$ de la gaine (2) ;
   - en ce que l'indice de réfraction $n_m$ du milieu transducteur (4) est moins élevé que l'indice de réfraction $n_g$ du coeur de la fibre optique
   - et en ce que le diamètre w du milieu transducteur (4) a une valeur très faible.

3. Cellule optique transductrice à guide de lumière caractérisée
   - en ce qu'elle se compose d'un coupleur optique directionnel à deux guides d'ondes (3) ;
   - en ce que le coupleur optique autorise la propagation de son mode fondamental et de son mode de premier ordre ;
   
   en ce que seul le mode fondamental de l'un des guides d'entrée est injecté dans le coupleur optique ;
   - en ce que la longueur L du coupleur optique est donnée par l'expression

   $$L = \frac{L_c}{2} + m\, L_c\,;$$

   - en ce que les deux guides d'ondes (3) ont un indice de réfraction $n_g$ plus élevé que l'indice de réfraction $n_s$ du substrat (2) ;
   - en ce qu'un milieu transducteur (4) est disposé entre les deux guides d'ondes (3) ;
   - en ce que l'indice de réfraction $n_m$ du milieu transducteur est moins élevé que l'indice de réfraction $n_g$ des guides d'ondes (3)

- et en ce que l'épaisseur W du milieu transducteur (4) a une valeur faible.

**4.** Cellule optique transductrice selon l'une quelconque des revendications 1 à 3 caractérisée
- en ce que le milieu transducteur (4) est une solution aqueuse.

**5.** Cellule optique transductrice selon l'une quelconque des revendications 1 à 3, caractérisée
- en ce que le milieu transducteur (4) est une solution avec un ou plusieurs solvants ordinaires.

**6.** Cellule optique transductrice selon l'une quelconque des revendications 1 à 3, caractérisée
- en ce que le milieu transducteur (4) se compose de toutes substances absorbantes.

**7.** Cellule optique transductrice selon l'une quelconque des revendications 1 à 3, caractérisée
- en ce que le milieu transducteur (4) se compose de toutes substances fluorescentes.

**8.** Utilisation de la cellule optique transductrice selon l'une quelconque des revendications 1 et 2 dans un capteur à spectroscopie optique.

**9.** Utilisation de la cellule optique transductrice selon l'une quelconque des revendications 1 et 2 dans un capteur à interférométrie optique.

**10.** Utilisation de la cellule optique transductrice selon la revendication 3 dans un capteur à interférométrie optique à deux modes pour la mesure du changement d'indice du milieu transducteur.

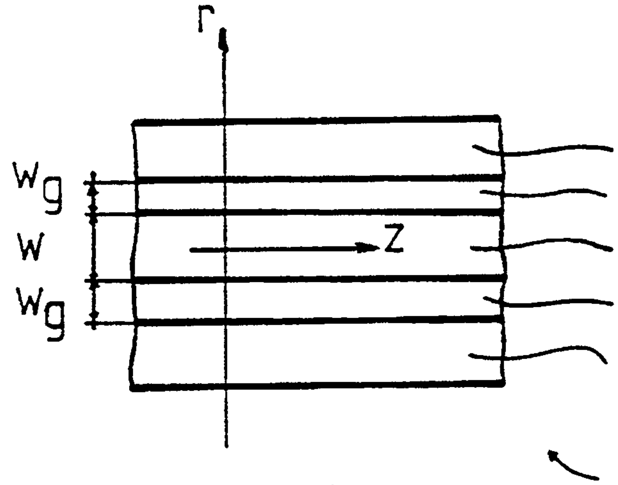


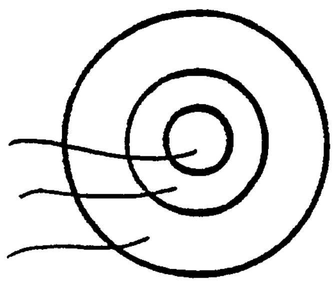

1

FIG.1

FIG.2

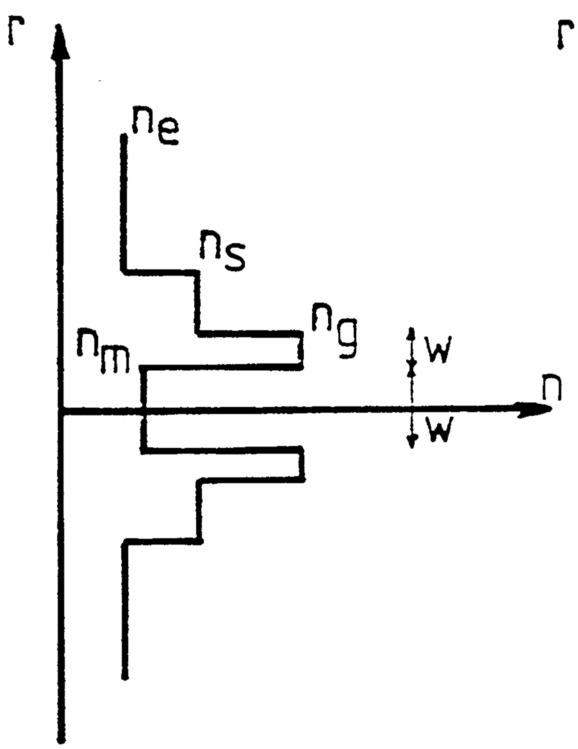


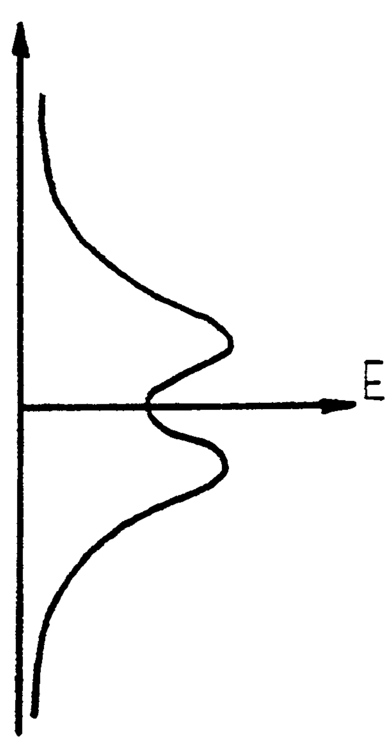


FIG. 3.a

FIG. 3.b

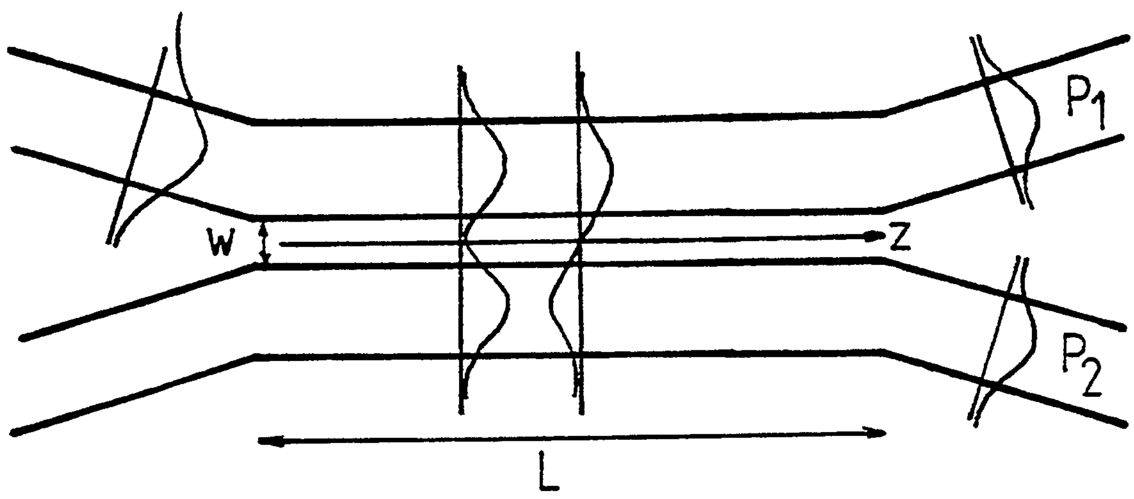
P1
W
Z
P2
L

FIG. 4.a

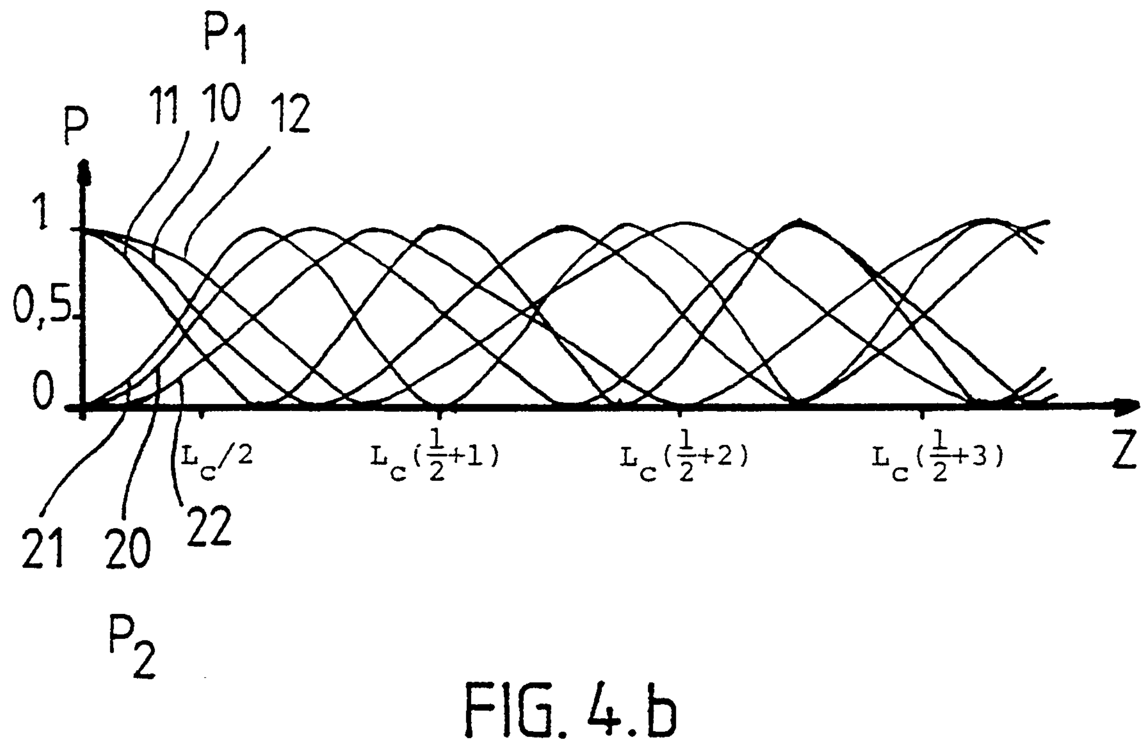
P1
P
11
10
12
1
0,5
0
$L_c/2$
$L_c(\frac{1}{2}+1)$
$L_c(\frac{1}{2}+2)$
$L_c(\frac{1}{2}+3)$
Z
21
20
22
P2

FIG. 4.b